# EUROPEAN PATENT SPECIFICATION

(11) **EP 1 655 267 B1**
(45) Date of publication and mention of the grant of the patent: **16.03.2016**
(21) Application number: 05256750.0
(22) Date of filing: 01.11.2005
(51) Int. Cl.: C01B 31/12, H01M 4/133, H01M 4/1393, H01M 4/583, H01M 4/62, H01M 4/96, C01B 31/10, H01G 9/04, H01G 9/00, H01M 4/86

(54) **Carbons useful in energy storage devices**
Kohlenstoffmaterialien für Energiespeichervorrichtungen
Produits en carbone pour dispositifs de stockage d'énergie

(30) Priority: 04.11.2004 US 624927
(43) Date of publication of application: 10.05.2006
(73) Proprietor: Rohm and Haas Company, Philadelphia, PA 19106-2399 (US)
(72) Inventor: Lundquist, Eric G., North Wales, Pennsylvania 19454 (US); Parker, Garth R. Jr., Lansdale, Pennsylvania 19446 (US)
(74) Representative: Kent, Venetia Katherine

(56) References cited:
- EP-A- 0 490 317
- EP-A- 1 049 116
- EP-A- 1 514 859
- WO-A-2005/089145
- US-A- 1 921 297
- US-A- 2 036 380
- US-A- 5 338 462

## Description

The present invention relates to carbons that are produced from carbon precursor selected from naturally occurring carbohydrate materials, pitch derived from coal tar, pitch derived from petroleum and combinations thereof, which carbons are useful in energy storage devices. The present invention also relates to a process for making such carbons and to the use of such carbons in the formation of electrode structures for use in (i) energy storage applications such as batteries, fuel cells and electric double layer capacitors and (ii) capacitive water deionization applications.

Energy storage devices using carbon based electrodes are commercially available. As the applications for energy storage devices, for example electric double layer capacitors (sometimes referred to as ultracapacitors or super capacitors), expand, however, the need for new carbons with enhanced properties also expands.

The capacitance of most conventional ultracapacitors is directly related to the surface area of its electrodes. Accordingly, in theory, a higher specific surface area for a given activated carbon should correspond to a higher specific capacitance for that activated carbon. In practice, however, the relationship between surface area and capacitance is not that simple. That is, generally speaking, as the surface area of a given activated carbon increases, so too does its pore volume. As the pore volume of an activated carbon increases, the density of the carbon decreases and the energy density (volumetric capacitance) exhibited by that activated carbon typically decreases. In fact, for most conventional activated carbons, the capacitance per unit volume (F/cm³) tends to be maximized when the surface area per unit weight is about 2,000 m²/g, and is inversely decreased when the surface area per unit weight exceeds about 2,500 m²/g.

Given the commercial need for ultracapacitors exhibiting ever higher volumetric capacitances, there is an impetus for the development of suitable electrode materials having ever higher surface areas. Various materials have been studied to fulfill this need. Most of these materials use either high cost polymer films and/or are produced through complicated laboratory fabrication and activation processes that are difficult or uneconomical to put into industrial mass production.

The method described in the International Patent Application WO2005/89145 comprises the curing of a mixture under conditions effective to provide a carbon and its carbonization under conditions effective for providing a porous carbon. The cured mixture comprises (i) at least one carbohydrate, (ii) at least one dehydrating component (sulphuric acid H₂SO₄) and (iii) at least one non-metallic cationic component (ammonium cation NH4⁺). This document demonstrates that as the surface area in the resulting carbon goes up with the processing temperature, then the nitrogen content of the resulting carbon goes down. Example 45 was carried out at 1050°C and shows residual nitrogen of only 1,39% when processed at that temperature.

The European Patent Application EP1049116 discloses a carbonaceous material, its production process and electric double layer capacitor employing it. The carbonaceous material disclosed in this document has a total pore volume of 0.3 to 2.0 cm³/g, a volume of micropores having diameters of from 10 to 20 A of 10 to 60% based on the total pore volume, a volume of mesopores having diameters of from 20 to 200 A of 20 to 70% based on the total pore volume and a specific surface area of 1000 to 2500 m²/g.

One approach for providing such low cost, high performance materials for use in electrodes for energy storage devices is disclosed by Uehara et al., in U.S. Patent Application Publication No. 2003/0086860. Uehara et al. disclose a method for producing a porous carbon comprising activating a soft carbon-type carbon material with alkali in the presence of a carboxylic acid ion and at least one metal ion selected from the group consisting of iron ions, cobalt ions, manganese ions and nickel ions. Uehara et al. report that the use of their method can produce activated carbons exhibiting a volume specific surface area of ≥ 1,000 m²/cm³ and that electrical double layer capacitors using these carbons may exhibit capacitances per unit volume of ≥ 20 F/cm³.

The use of metal ions as disclosed in Uehara may result in stability concerns when the resulting carbons are incorporated into energy storage devices such as, for example, ultracapacitors. That is, the presence of electroactive metals in the resulting carbon may cause large current leakages that could render the energy storage device unsatisfactory. Thus, additional processing steps would be need to remove the electroactive metals from the resulting carbon before incorporating such carbon into, for example, an ultracapcitor. Accordingly, there remains a need for a low cost, high performance material for use in electrodes for energy storage devices, such as ultracapacitors, that can be fabricated economically on an industrial scale.

Surprisingly, we have discovered that by incorporating relatively small amounts of nitrogen functionality into activated carbons derived from carbon precursor selected from naturally occurring carbohydrates, pitch derived from coal tar, pitch derived from petroleum and combinations thereof, a high surface area material exhibiting a high energy density may be provided.

In one aspect of the present invention, there is provided a carbon material, wherein the carbon material is derived from a carbon precursor selected from naturally occurring carbohydrate, pitch derived from coal tar, pitch derived from petroleum and combinations thereof, wherein the carbon material contains greater than 1.5 wt% elemental nitrogen and wherein the carbon material exhibits a surface area greater than 1,500 m²/g.

In another aspect of the present invention, there is provided an electrode comprising a carbon material of the present invention, wherein the carbon material is derived from a carbon precursor selected from naturally occurring carbohydrate, pitch derived from coal tar, pitch derived from petroleum and combinations thereof, wherein the carbon material contains greater than 1.5 wt% elemental nitrogen and wherein the carbon material exhibits a surface area greater than 1,500 m²/g.

In another aspect of the present invention, there is provided an ultracapacitor comprising an electrode of the present invention.

In another aspect of the present invention, there is provided a battery comprising an electrode of the present invention.

In another aspect of the present invention, there is provided an energy storage device comprising an electrode of the present invention, wherein the energy storage device exhibits an operating voltage greater than 2.5 volts.

In another aspect of the present invention, there is provided a use of an energy storage device of the present invention in a system selected from an automobile, power quality, engine starting, energy storage in photovoltaic, energy storage in windmills, medical system, mobile propulsion system, military electronics, transportation system, commercial electronics, consumer electronics, portable electronics, audio system and consumer appliance.

All ranges defined herein are inclusive and combinable.

The term "sugar" used herein and in the appended claims encompasses any of a number of useful saccharide materials. Included in the list of useful sugars are the mono-saccharides, disaccharides and polysaccharides and their degradation products, e.g., pentoses, including aldopentoses, methylpentoses, keptopentoses, like xylose and arabinose; deoxyladoses like rhamnose; hexoses and reducing saccharides such as aldo hexoses like glucose, galactose and mannose; the ketohexoses, like fructose and sorbose; dissaccharides, like lactose and maltose; non-reducing disaccharides, such as sucrose and other polysaccharides such as dextrin and raffinose; and hydrolyzed starches which contain as their constituents oligosaccharides. A number of sugar syrups, including corn syrup, high fructose corn syrup, and the like, are common sources as are various granular and powdered forms.

Naturally occurring carbohydrates suitable for use with the present invention include, for example, naturally occurring sugar; polysaccharide; starch; lignin; cellulose; and, mixtures thereof.

In some embodiments, the carbon material of the present invention is prepared from a carbon precursor, wherein the carbon precursor is a naturally occurring carbohydrate selected from wood, coconut shell, sugar and mixtures thereof

In some embodiments, the carbon material of the present invention is prepared from a carbon precursor, wherein the carbon precursor is a naturally occurring carbohydrate selected from wood, coconut shell, sucrose, fructose and mixtures thereof.

In some embodiments, the carbon material of the present invention is prepared from a carbon precursor, wherein the carbon precursor is a naturally occurring carbohydrate selected from sucrose.

In some embodiments, the carbon material of the present invention is prepared from a carbon precursor, wherein the carbon precursor is selected from pitch derived from coal tar, pitch derived from petroleum and combinations thereof.

The carbon material of the present invention contains greater than 1.5 wit%; alternatively greater than 1.75 wt.%; alternatively greater than 2.0 wt.%; alternatively between 1.5 and 10.0 wt%; alternatively between 1.5 and 8.0 wit%; alternatively between 1.5 and 7.0 wt%; alternatively between 1.5 and 5.0 wt%; alternatively between 1.5 and 3.0 wt%. The elemental nitrogen content of the carbon material may be determined using traditional combustion elemental analysis and X-ray Photoelectron Spectroscopy (XPS). XPS provides accurate and reliable elemental nitrogen values. Additionally, XPS allows for the determination of the nature of the nitrogen functionality. Our analysis indicates that the elemental nitrogen may be present as nitrile, amide, amine, ammonium and ring nitrogen functionality.

In some embodiments, the carbon material of the present invention exhibits a surface area determined using the Brunauer, Emmett, Teller (BET) method of analysis of greater than 1,500 m²/g; alternatively between 1,500 m²/g and 3,000 m²/g; alternatively between 1,500 m²/g and 2,500 m²/g.

In some embodiments, the carbon material of the present invention exhibits a pore volume determined by nitrogen adsorption techniques of between 0.1 cm³/g and 2.0 cm³/g; alternatively between 0.5 cm³/g and 2.0 cm³/g.

In some embodiments, the carbon material of the present invention exhibits a pore size distribution determined by the Horvath-Kawazoe (H-K) method with at least one peak less than 50.0 nm; alternatively, with at least one peak less than 5.0 nm; alternatively, with at least one peak between 0.1 and 5.0 nm.

In some embodiments, the carbon material of the present invention exhibits a pore volume determined by nitrogen adsorption techniques of less than 2 cm³/g and exhibits a pore size distribution determined by the H-K method with at least one peak between 0.1 and 50 nm.

The carbon materials of the present invention may be produced or formed in a variety of conventional shapes or objects including, for example, powders, granules, monoliths, beads, sheets, blocks, threads, filaments, tubes, papers, membranes, felts, foams, plates, fabrics and nonwovens.

In some embodiments, the carbon materials of the present invention may be provided as powders; alternatively as powders that exhibit a volumetric mean particle diameter of ≤ 50 µm; alternatively as powders that exhibit a volumetric mean particle diameter of < 50 µm; alternatively as powders that exhibit a volumetric mean particle diameter of ≤ 10 µm.

In some embodiments, the carbon materials of the present invention may be formed into electrodes for use in a variety of energy storage devices and energy management devices including, for example, electrical double layer capacitors (also known as ultracapacitors and super capacitors), batteries, fuel cells, power stabilization devices and electrocapacitive water deionization devices.

In some embodiments, the carbon materials of the present invention may be used to produce electrodes for use in a capacitor, for example, in a double layer capacitor that contains at least two such electrodes, at least one porous separator interposed between the at least two such electrodes and an electrolytic solution that is in contact with the at least two such electrode structures and the at least one porous separator.

Electrolytic solutions suitable for use with the present invention include, for example, organic electrolytic solutions and aqueous electrolytic solutions.

In some embodiments, double layer capacitors containing carbon materials of the present invention contain an organic electrolytic solution; alternatively an organic electrolytic solution obtained by dissolving an electrolyte into an organic solvent or a mixture of organic solvents.

Organic solvents suitable for use in electrolytic solutions of the present invention include, for example, electrochemically stable ethylene carbonate; propylene carbonate; butylene carbonate; γ-butyrolactone; sulfolane; sulfolane derivative; 3-methylsulfolane; 1,2-dimethoxyethane; acetonitrile; glutaronitrile; valeronitrile; dimethlformamide; dimethylsulfoxide; tetrahydrofuran; dimethoxyethane; methylformate; dimethyl carbonate; diethyl carbonate; ethyl methyl carbonate and mixtures thereof.

Electrolytes suitable for use in the electrolytic solutions of the present invention include, for example, a salt having a quarternary onium cation represented by R₁R₂R₃R₄N⁺ or R₁R₂R₃R₄P⁺, wherein R₁, R₂, R₃ and R₄ are each independently a C₁₋₆ alkyl group and an anion selected from, for example, BF₄⁻, PF₆⁻, ClO₄⁻, CF₃SO₃⁻ and (SO₂R₅)(SO₂R₆)N⁻, wherein R₅ and R₆ are each independently a C₁₋₄ alkyl group, an alkylene group and collectively a ring structure. In some embodiments, the electrolyte is selected from a group including (C₂H₅)₄NBF₄, (C₂H₅)₃(CH₃)NBF₄, (C₂H₅)₄PBF₄ and (C₂H₅)₃(CH₃)PBF₄. In some embodiments, one of the noted salts is dissolved in an organic solution at a concentration of 0.1 to 2.5 mol/L, alternatively 0.5 to 2 mol/L.

In some embodiments, double layer capacitors containing carbon materials of the present invention contain an aqueous electrolytic solution.

Aqueous electrolytic solutions suitable for use with the present invention may be obtained by dissolving an electrolyte into an aqueous solution.

Aqueous solutions suitable for use in electrolytic solutions of the present invention include, for example, potassium hydroxide and sulfuric acid.

Separators suitable for use in the double layer capacitors of the present invention include, for example, non-woven fabric of polypropylene fiber, non-woven fabric of glass fiber, synthetic cellulose, natural cellulose and combinations thereof.

In some embodiments, electrodes comprising a carbon material of the present invention in an organic electrolyte will exhibit a capacitance of greater than 80 F/g; alternatively greater than 100 F/g.

In some embodiments, the double layer capacitors of the present invention will exhibit operating voltages of ≥ 2.5 volts.

In some embodiments, the energy storage devices of the present invention may be used in a variety of systems including, for example; an automobile, power quality system, engine starting system, energy storage system for a photovoltaic cell, energy storage system for a windmill, medical system, mobile propulsion system, military electronics system, transportation system, commercial electronics system, consumer electronics system, portable electronics system, audio system and consumer appliance.

The carbon materials of the present invention may be prepared by treating a carbon precursor using a combination of:
a) dehydrating;
b) pyrolyzing;
c) activating; and,
d) introducing nitrogen functionality.
Two or more of the operations (a) - (d) may be combined into a single operation. For example, the pyrolyzing and activating operations may be combined into a single operation. Also, the operations (a) - (d) may occur in any order. For example, introducing nitrogen functionality may occur before or after dehydrating; alternatively, before or after activating. Also one or more of the operations (a) - (c) may be omitted.

The carbon materials of the present invention may be prepared from a naturally occurring carbohydrate carbon precursor by introducing nitrogen functionality into the carbon precursor and performing at least two of the following:
a) dehydrating the carbon precursor;
b) pyrolyzing the carbon precursor; and,
c) activating the carbon precursor.
Two or more of the operations (a) - (c) may be combined into a single operation. For example, the pyrolyzing and activating operations may be combined into a single operation. Also, the operations (a) - (c) may occur in any order and may precede or follow the introduction of nitrogen functionality into the carbon precursor. For example, introducing nitrogen functionality may occur before or after dehydrating; alternatively, before or after activating.

Dehydrating the carbon precursor, particularly naturally occurring carbohydrate carbon precursor may be effected using conventional means, which means may include the addition of a reactive additive. Reactive additives suitable for use in dehydrating the naturally occurring carbohydrate include, for example, acids and acid salts such as sulfuric acid and phosphoric acid. The use of reactive additives may accelerate the removal of -OH groups as water and the formation of double bonds in the carbohydrate or sugar ring structure.

Pyrolyzing the carbon precursor is effected using conventional means. For example, the carbon precursor may be pyrolyzed under an inert or activating atmosphere or combination of both. The pyrolysis temperature may, for example, fall within the range of 400 to 2,000 °C; alternatively between 700 and 1,500 °C; alternatively between 800 and 1,200 °C. The pyrolysis time may range between 1 and 12 hours; alternatively between 2 and 10 hours; alternatively between 3 and 8 hours. The pyrolysis atmosphere may be either inert or activating or a combination of the two. Inert pyrolysis atmospheres include inert, non-oxidizing gases, for example, nitrogen, argon and helium. Activating atmospheres include, for example, carbon monoxide, carbon dioxide, steam and air. Alternatively, chemical activation may be accomplished using alkali hydroxide such as potassium hydroxide, mineral acids such as sulfuric acid or Lewis acids such as zinc dichloride. In some embodiments, an inert pyrolysis may be followed by an activation process to increase the porosity and surface area of the carbon material.

Activation operations involving air, carbon dioxide and steam may be used to introduce non-nitrogen functional groups containing oxygen to the carbon material. Such functional groups include hydroxyl and carboxylic moieties. These functional groups can increase overall capacitance by giving rise to pseudo-capacitance. However, such pseudo-capacitance may degrade over time making for an unstable energy storage device. Oxygen containing functional groups may be stabilized by derivitization using, for example, organosilane silylating agents including, for example, hexamethyldisilane and trimethyl chlorosilane..

Nitrogen functionality may be introduced to the carbon precursor at any point during the process for preparing the carbon material of the present invention. For example, the nitrogen functionality may be introduced before or after dehydrating, pyrolyzing or activating.

Methods of introducing nitrogen functionality include, for example, ammoxidation and the use of nitrogen containing additives. Ammoxidation involves the contacting of the carbon precursor material at some point during the process of making the carbon material with ammonium gas or ammonium/oxygen gas mixtures. The use of nitrogen containing additives involves contacting the carbon precursor material at some point during the process of making the carbon material with a nitrogen containing additive that reacts with the carbon precursor at elevated temperatures. Such nitrogen containing additives include, for example, ammonium chloride, polyallylamine, polydiallyldimethylammonium chloride, polyethylenimine, triethanolamine, melamine, ammonium sulfate, ammonium dihydrogen phosphate, urea, ammonium aluminum sulfate, ammonium hydrogen sulfate, betaine, ammonium acetate and mixtures thereof.

### Examples

Some embodiments of the present invention will now be described in detail in the following examples.

### Comparative Example 1

An activated carbon material that did not contain elemental nitrogen was prepared using sucrose as follows:
(a) 500 grams of sucrose were dissolved into 350 grams of distilled water;
(b) 56 grams of 96 wt% sulfuric acid was slowly added to the product of (a) with vigorous mixing;
(c) the product of (b) was poured into a glass tray;
(d) the glass tray was placed into an oven at room temperature;
(e) the temperature of the oven was raised to 120 °C and held at that temperature overnight;
(f) the next day, a black carbon char was observed to have formed in the glass tray;
(g) the black carbon char was removed from the glass tray and ground to a particle size of less than 10 mesh, determined using a screen having a 2.00 mm nominal sieve opening with sieve designations: USA Standard Testing Sieve ASTME-11 Specification No. 10 and Tyler Equivalent 9 mesh.
(h) 100 grams of the product of (g) was placed into an alumina tube and heated in a tube furnace up to 500 °C under a nitrogen flow at 5 C/min and held at that temperature for 3.0 hours; and,
(i) the material from (h) was then heated to 1,000 °C and activated with CO₂ for 2.5 hours to give a product activated carbon material having a surface area of 2,058 m²/g and a pore volume of 1.0 cm³/g.

The product obtained via this example was analyzed using XPS to confirm the absence of elemental nitrogen content.

### Comparative Example 2

An activated carbon material commercially available from Kuraray Chemical Company as BP-20, which does not contain element nitrogen, was used for comparative purposes.

### Comparative Example 3

An activated carbon material that did contain elemental nitrogen was prepared using sucrose as follows:
(a) 150 grams of ammonium chloride was dissolved into 350 grams of distilled water;
(b) 500 grams of sucrose was slowly added to the product of (a) with mixing;
(c) 120 grams of 96 wt% sulfuric acid was slowly added to the product of (b) with vigorous mixing;
(d) the product of (c) was poured into a glass tray;
(e) the glass tray was placed into an oven at room temperature;
(f) the temperature of the oven was raised to 120 °C and held at that temperature overnight;
(g) the next day, a black carbon char was observed to have formed in the glass tray;
(h) the black carbon char was removed from the glass tray and ground to a particle size of less than 10 mesh, determined using a screen having a 2.00 mm nominal sieve opening with sieve designations: USA Standard Testing Sieve ASTME-11 Specification No. 10 and Tyler Equivalent 9 mesh.
(i) 100 grams of the product of (h) was placed into an alumina tube and heated in a tube furnace up to 500 °C under a nitrogen flow at 5 C/min and held at that temperature for 3.0 hours; and,
(i) the material from (h) was then heated to 1,000 °C and activated with CO₂ for 4.5 hours to give a product activated carbon material having a surface area of 2,064 m²/g and a pore volume of 0.885 cm³/g.

The product obtained via this example was determined to have an elemental nitrogen content of 1.5 wt% using XPS analysis.

### Comparative Example 4

An activated carbon material that did contain elemental nitrogen was prepared using sucrose as follows:
(a) 100 grams of ammonium chloride was dissolved into 350 grams of distilled water;
(b) 500 grams of sucrose was slowly added to the product of (a) with mixing;
(c) 120 grams of 96 wt% sulfuric acid was slowly added to the product of (b) with vigorous mixing;
(d) the product of (c) was poured into a glass tray;
(e) the glass tray was placed into an oven at room temperature;
(f) the temperature of the oven was raised to 120 °C and held at that temperature overnight;
(g) the next day, a black carbon char was observed to have formed in the glass tray;
(h) the black carbon char was removed from the glass tray and ground to a particle size of less than 10 mesh, determined using a screen having a 2.00 mm nominal sieve opening with sieve designations: USA Standard Testing Sieve ASTME-11 Specification No. 10 and Tyler Equivalent 9 mesh.
(i) 100 grams of the product of (h) was placed into an alumina tube and heated in a tube furnace up to 500 °C under a nitrogen flow at 5 C/min and held at that temperature for 3.0 hours; and,
(i) the material from (h) was then heated to 1,000 °C and activated with CO₂ for 4.0 hours to give a product activated carbon material having a surface area of 2,227 m²/g and a pore volume of 1.0 cm³/g.

The product obtained via this example was determined to have an elemental nitrogen content of 1.5 wt% using XPS analysis.

### Example 5

An activated carbon material that did contain elemental nitrogen was prepared using sucrose as follows:
(a) 100 grams of ammonium chloride was dissolved into 350 grams of distilled water;
(b) 500 grams of sucrose was slowly added to the product of (a) with mixing;
(c) 120 grams of 96 wt% sulfuric acid was slowly added to the product of (b) with vigorous mixing;
(d) the product of (c) was poured into a glass tray;
(e) the glass tray was placed into an oven at room temperature;
(f) the temperature of the oven was raised to 120 °C and held at that temperature overnight;
(g) the next day, a black carbon char was observed to have formed in the glass tray;
(h) the black carbon char was removed from the glass tray and ground to a particle size of less than 10 mesh, determined using a screen having a 2.00 mm nominal sieve opening with sieve designations: USA Standard Testing Sieve ASTME-11 Specification No. 10 and Tyler Equivalent 9 mesh.
(i) 100 grams of the product of (h) was placed into an alumina tube and heated in a tube furnace up to 500 °C under a nitrogen flow at 5 C/min and held at that temperature for 3.0 hours; and,
(i) the material from (h) was then heated to 1,000 °C and activated with CO₂ for 3.0 hours to give a product activated carbon material having a surface area of 1,703 m²/g and a pore volume of 0.726 cm³/g.

The product obtained via this example was determined to have an elemental nitrogen content of 1.65 wt% using XPS analysis.

### Example 6

The activated carbons from Examples 1-5 were tested for various performance parameters presented in Table 1, below. A list of the equipment used to obtain the data presented in Table 1, follows:
a) Frequency Response Analyzer (FRA), Schlumberger Solartron Model 1250;
b) Potentiostat, EG&G Model 273;
c) Digital Multimeter, Keithley Model 197;
d) Capacitance test box S/N 005, 100 ohm setting;
e) RCL Meter, Philips PM6303
f) Power Supply, Hewlett-Packard Model E3610A
g) Balance, Mettler H10;
h) Micrometer, Brown/Sharp;
i) Leakage current apparatus;
j) Battery/capacitor tester, Arbin Model HSP-2042

### Organic Electrolyte Capacitor Performance Testing

A sample of each of the carbons provided in Example 1-5 was evaluated for its properties and performance as an electrode material in an electrochemical capacitor having an organic electrolyte. All of the carbon samples were taken in particulate form and formed into a separate electrode having a diameter of 1.59 cm and a thickness of 0.005 cm. The separator used in the test capacitor system was ∼0.0076 cm thick. Each of the test electrodes was dried under vacuum conditions (mechanical roughing pump) at 195 °C for 18 hours. The dried test electrodes were then soaked in electrolyte. The cooled, test electrodes (still under vacuum) were transferred into a drybox. All subsequent assembly work was performed in the drybox. The test electrodes were soaked in the organic electrolyte for an additional 10 minutes and then they were assembled into cells. The electrolyte comprised an equal volume mixture of propylene carbonate (PC) and dimethyl carbonate (DMC) that contained 1.0 M of tetraethylammonium tetra fluoroborate salt (TEATFB). The separator used was an "open cell foam type" material that was approximately 0.0076 cm thick when assembled in a cell. The assembled cells were removed from the drybox for testing. Metal plates were clamped against each conductive face-plate and used as current collectors. The test capacitor cells were then conditioned at 1.0 V for ten minutes after which they were measured for properties. The test capacitor cells were then conditioned at 2.0 V for 10 minutes after which they were again measured for properties.

### Capacitor Cell Test Measurements

All of the test measurements on the capacitor cells were performed at room temperature.

The sequence at 1.0 V was as follows: 1 kHz ESR using the RCL meter, charging capacitance with a 100 ohm series resistance using the capacitance test box, leakage current after 30 minutes using the leakage current apparatus, electrochemical impedance spectroscopy (EIS) measurements using the potentiostat and FRA.

The sequence at 2.0 V was the same as that used at 1.0 V. The final measurements were constant current charge/discharge measurements using the Arbin. EIS measurements were made in a four-lead configuration with a 0.010 -V- amplitude sine-wave-signal.

The C100 charging capacitance was determined by measuring the time to charge the capacitor from 0 V (1-1/e) V = 0.632 V after application of 1.0 or 2.0 Volts through the capacitor and a 100 Ω resistor connected in series.

Gravimetric capacitance (in F/g) was then calculated by dividing the charge time (in seconds) by 100 (the series resistance value). The volumetric capacitance was calculated by multiplying the gravimetric capacitance by the density of the carbon.

**Table 1**

| **Sample** | **Surface Area** | **Pore Volume** | **Wt. % Nitrogen** | **Volumetric Capacitance (2 volts)** | **Gravimetric Capacitance (2 volts)** |
|---|---|---|---|---|---|
| Example 1 Comparative | 2058 m2/g | 1.0 cc/g | 0% | 72 F/cc | 96 F/g |
| Example 2 Comparative | 2039 m2/g | 0.88 cc/g | 0% | 69 F/cc | 97 F/g |
| Example 3 | 2064 m2/g | 0.88 cc/g | 1.5% | 94 F/cc | 114 F/g |
| Example 4 | 2227 m2/g | 1.0 cc/g | 1.5% | 92 F/cc | 118 F/g |
| Example 5 | 1703 m2/g | 0.73 cc/g | 1.65% | 94 F/cc | 106 F/g |

### Example 7: Silylation of a carbon containing oxygen functionality (prophetic)

To a 5 gram sample of a carbon (surface area 2,000 m2/g, 1.0 cc/g) containing 90% carbon, 5% oxygen, 2% nitrogen and 3% hydrogen is added 100 ml of anhydrous toluene and 2.0 grams of chlorotrimethylsilane. This mixture is heated to reflux and held for 12 hours. The carbon is recovered by filtration, washed with excess toluene and dried under vacuum to produce a carbon containing 2.5 % Si.

The resulting carbon material is stable and is useful as an electrode for an ultracapacitor device.

### Example 8: Coal tar pitch carbon precursor (prophetic)

A carbon material is prepared from a coal tar pitch carbon precursor as follows:
(a) 100 grams of melamine is mixed with 500 grams of coal tar pitch ;
(b) the mixture of (a) is poured into a glass tray;
(c) the glass tray is placed into an oven at room temperature;
(d) the temperature of the oven is slowly raised to 800 °C under a nitrogen flow and held at that temperature for 8 hours
(e) the material from (d) is then heated to 1,000 °C and activated with CO₂ for 2.5 hours to give a product activated carbon material having a surface area of over 2,000 m²/g, a pore volume of 1.0 cm³/g and greater than 1.5 wt% elemental nitrogen.

The resulting carbon material is useful as an electrode for an ultracapacitor.

## Claims

1. A carbon material, wherein the carbon material is derived from a carbon precursor selected from naturally occurring carbohydrate, pitch derived from coal tar, pitch derived from petroleum and combinations thereof, wherein the carbon material contains greater than 1.5 wt% elemental nitrogen and wherein the carbon material exhibits a surface area greater than 1,500 m²/g.

2. The carbon material of claim 1, wherein the carbon material exhibits a pore volume of less than 2 cm³/g and exhibits a pore size distribution with at least one peak between 0.1 and 50 nm.

3. An electrode comprising a carbon material according to claim 1.

4. An ultracapacitor comprising an electrode according to claim 3.

5. A battery comprising an electrode according to claim 3.

6. An energy storage device comprising an electrode according to claim 3, wherein the energy storage device exhibits an operating voltage greater than 2.5 volts.

7. Use of an energy storage device according to claim 6 in a system selected from an automobile, power quality, engine starting, energy storage in photovoltaic, energy storage in windmills, medical system, mobile propulsion system, military electronics, transportation system, commercial electronics, consumer electronics, portable electronics, audio system and consumer appliance.

## Patentansprüche

1. Ein Kohlenstoffmaterial, wobei das Kohlenstoffmaterial aus einem Kohlenstoffvorläufer, ausgewählt aus natürlich vorkommendem Kohlenhydrat, aus Kohlenteer erlangtem Pech, aus Mineralöl erlangtem Pech und Kombinationen davon, erlangt wird, wobei das Kohlenstoffmaterial mehr als 1,5 Gew.-% elementaren Stickstoff enthält, und wobei das Kohlenstoffmaterial einen Oberflächenbereich von mehr als 1500 m²/g aufweist.

2. Kohlenstoffmaterial gemäß Anspruch 1, wobei das Kohlenstoffmaterial ein Porenvolumen von weniger als 2 cm³/g aufweist und eine Porengrößenverteilung mit mindestens einem Spitzenwert zwischen 0,1 und 50 nm aufweist.

3. Eine Elektrode, die ein Kohlenstoffmaterial gemäß Anspruch 1 beinhaltet.

4. Ein Ultrakondensator, der eine Elektrode gemäß Anspruch 3 beinhaltet.

5. Eine Batterie, die eine Elektrode gemäß Anspruch 3 beinhaltet.

6. Eine Vorrichtung zur Speicherung von Energie, die eine Elektrode gemäß Anspruch 3 beinhaltet, wobei die Vorrichtung zur Speicherung von Energie eine Betriebsspannung von mehr als 2,5 Volt aufweist.

7. Die Verwendung einer Vorrichtung zur Speicherung von Energie gemäß Anspruch 6 in einem System, das aus den Folgenden ausgewählt ist: einem Automobil, Netzqualität, Motorstart, Energiespeicherung in Photovoltaik, Energiespeicherung in Windkraftanlagen, einem medizinischem System, mobilem Antriebssystem, militärischer Elektronik, Verkehrssystem, Handelselektronik, Unterhaltungselektronik, tragbarer Elektronik, Audiosystem und Verbrauchergerät.

## Revendications

1. Une matière carbonée, la matière carbonée étant dérivée d'un précurseur de carbone sélectionné parmi un hydrate de carbone d'origine naturelle, un brai dérivé de goudron de houille, un brai dérivé de pétrole et des combinaisons de ceux-ci, la matière carbonée contenant plus de 1,5 % en poids d'azote élémentaire et la matière carbonée présentant une surface spécifique de plus de 1 500 m²/g.

2. La matière carbonée de la revendication 1, la matière carbonée présentant un volume de pores de moins de 2 cm³/g et présentant une distribution de la taille des pores avec au moins un pic entre 0,1 et 50 nm.

3. Une électrode comprenant une matière carbonée selon la revendication 1.

4. Un supercondensateur comprenant une électrode selon la revendication 3.

5. Une batterie comprenant une électrode selon la revendication 3.

6. Un dispositif de stockage d'énergie comprenant une électrode selon la revendication 3, le dispositif de stockage d'énergie présentant une tension de fonctionnement de plus de 2,5 volts.

7. Utilisation d'un dispositif de stockage d'énergie selon la revendication 6 dans un système sélectionné parmi une automobile, un système de qualité énergétique, de démarrage du moteur, de stockage d'énergie dans des photovoltaïques, de stockage d'énergie dans des éoliennes, un système médical, un système de propulsion mobile, un système d'électronique militaire, un système de transport, d'électronique commerciale, d'électronique grand public, d'électronique portable, un système audio et un appareil de grande consommation.
